# EUROPEAN PATENT SPECIFICATION

(11) **EP 3 894 302 B1**
(45) Date of publication and mention of the grant of the patent: **26.04.2023**
(21) Application number: 19809655.4
(22) Date of filing: 19.11.2019
(51) Int. Cl.: B62D 5/04, B62D 5/06, B62D 6/00, B62D 5/30, B62D 15/02

(54) **A METHOD FOR DETERMINING HYDRAULIC FAILURE IN A HYBRID STEERING SYSTEM, A CONTROL DEVICE, A HYBRID STEERING SYSTEM AND A VEHICLE**
VERFAHREN ZUR BESTIMMUNG EINES HYDRAULISCHEN DEFEKTS IN EINEM HYBRIDEN LENKSYSTEM, STEUERVORRICHTUNG, HYBRIDES LENKSYSTEM UND FAHRZEUG
PROCÉDÉ DE DÉTERMINATION D'UNE DÉFAILLANCE HYDRAULIQUE DANS UN SYSTÈME DE DIRECTION HYBRIDE, DISPOSITIF DE COMMANDE, SYSTÈME DE DIRECTION HYBRIDE ET VÉHICULE

(30) Priority: 11.12.2018 SE 1851544
(43) Date of publication of application: 20.10.2021
(73) Proprietor: Scania CV AB, 151 87 Södertälje (SE)
(72) Inventor: ROTHHÄMEL, Malte, 141 42 Huddinge (SE)
(74) Representative: Scania CV AB
(86) International application number: PCT/SE2019/051171
(87) International publication number: WO 2020/122783

(56) References cited:
- EP-A2- 2 805 871
- US-A1- 2007 163 833
- US-A1- 2010 152 971
- US-A1- 2018 111 643

## Description

### TECHNICAL FIELD

The invention relates to a method for determining hydraulic failure in a hybrid steering system of a vehicle. The invention also relates to a control device, a hybrid steering system comprising such a control device, and a vehicle comprising such a hybrid steering system.

### BACKGROUND

Heavy vehicles, such as trucks and busses, may be configured with steering systems comprising both a hydraulic power steering system (HPS) and an electric power steering system (EPS) in order to improve steering performance for the driver. Such a steering system may be denoted hybrid steering system or electro-hydraulic hybrid steering system. A hybrid steering system typically comprises a steering wheel connected to a steerable wheel axle of the vehicle via a steering column, an electric power steering system arranged to provide a steering torque via said steering column for steering adjustment, and a hydraulic power steering system arranged to amplify the steering torque based on the total steering torque provided by the driver and said electric power steering system. The hydraulic power steering system may be operated by means of a pump driven by the engine of the vehicle. The electric power steering system typically comprises an electrical machine controlled to provide the steering torque on the steering column.

Today, an international standard ISO 26262 for functional safety management of electrical and/or electrical systems in automobiles exists. This standard aims to assess the risk of hazardous operational situations and to define safety measures to avoid or control systematic failures and to detect or control random hardware failures, or mitigate their effects. This standard means higher requirements for detection of errors, especially with regard to detection time. With a driver in the control loop, failures/errors may be relatively easy to detect, whereas during automated operation of a vehicle, failures may be very difficult to detect. With a hybrid steering system, failures in an electric power steering system may be relatively easy to detect. However, failures in the hydraulic power steering system may be difficult to detect. Failures in the hydraulic power steering system may for example be due to leakage of hydraulic fluid. One solution to this problem is to use a flow detector to detect hydraulic flow. A flow detector is, however, expensive and may also fail.

Document EP 2 805 871 A2 shows a method, performed by a control device, for determining hydraulic failure of a hybrid steering system (EPS , HPS) during automated operation of a vehicle the system is capable to detect malfunction of either the EPS or the HPS and engage the other remaining system, said hybrid steering system comprises: a steering column connected to a wheel axle with steerable wheels; an electric power steering system connected to the steering column; and a hydraulic power steering system connected to the electric power steering system. The system of EP 2 805 871 A2 detects malfunction of the hydraulic system.

### SUMMARY

Despite known solutions in the field, it would be desirable to achieve a method for detecting hydraulic failure in a hybrid steering system, which solves or at least alleviates at least some of the drawbacks of the prior art.

An object of the present invention is therefore to achieve a new and advantageous method for detecting hydraulic failure in a hybrid steering system, which method is reliable and increases safety especially during automated/autonomous operation. Another object of the present invention is to achieve a new and advantageous safety method for detecting hydraulic failure in a hybrid steering system, which method enables detection of failures at an early stage. Another object of the invention is to achieve a new and advantageous control device, vehicle, computer program and computer-readable medium.

The herein mentioned objects are achieved by a method, a control device, a vehicle, a computer program, and a computer-readable medium according to the independent claims.

Hence, according to an aspect of the present invention, a method, performed by a control device, for detecting hydraulic failure in a hybrid steering system is provided. The hybrid steering system comprises: a steering column connected to a wheel axle with steerable wheels; an electric power steering system connected to the steering column; and a hydraulic power steering system connected to the electric power steering system. The method comprises: determining a target steering angle change to be provided by means of the electric power steering system, based on a requested steering angle and a current steering angle; controlling the electric power steering system to temporarily provide a steering torque corresponding to a first target steering angle change larger than the determined target steering angle change, when the determined target steering angle change is lower than a predetermined threshold value; determining a steering angle velocity and/or steering angle acceleration resulting from the provided steering torque; and determining whether a hydraulic failure has occurred based on the determined steering angle velocity and/or steering angle acceleration.

According to another aspect of the invention, a control device configured for determining hydraulic failure of a hybrid steering system during automated operation of a vehicle is provided. The hybrid steering system comprises: a steering column connected to a wheel axle with steerable wheels; an electric power steering system connected to the steering column; and a hydraulic power steering system connected to the electric power steering system, wherein the control device is configured to: determine a target steering angle change to be provided by means of the electric power steering system, based on a requested steering angle and a current steering angle; control the electric power steering system to temporarily provide a steering torque corresponding to a first target steering angle change larger than the determined target steering angle change, when the determined target steering angle change is lower than a predetermined threshold value; determine a steering angle velocity and/or steering angle acceleration resulting from the provided steering torque; and determine whether a hydraulic failure has occurred based on the determined steering angle velocity and/or steering angle acceleration.

According to yet another aspect of the invention a hybrid steering system is provided. The hybrid steering system comprises a steering column connected to a wheel axle with steerable wheels; an electric power steering system connected to the steering column; and a hydraulic power steering system connected to the electric power steering system. The hybrid steering system further comprises a control device as disclosed herein.

According to another aspect of the invention, a vehicle is provided. The vehicle comprises a hybrid steering system as disclosed herein.

A hybrid steering system comprising an electric power steering system and a hydraulic power steering system may be very effective for steering a vehicle. However, errors and failures of components and systems is always a risk and it is crucial to detect such errors/failures in time to avoid dangerous situations. A vehicle allowing automated operation must be able to detect errors/failures without the use of a human driver inside the vehicle. Automated operation may comprise autonomous operation where the vehicle is operated autonomously based on high level (abstract) commands from an external control centre. Automated operation may further comprise a platooning vehicle or a vehicle being remote-controlled. Furthermore, automated operation may comprise an automated function, such as a traffic jam function, a highway function or similar, of a manually operated vehicle. Automated operation is thus a situation where the vehicle is operated without interference of a driver inside the vehicle. During automated operation, a steering torque applied on the steering column by the electric power steering system should result in a certain steering angle and steering angle velocity/acceleration. The relationship between the steering torque provided by the electric power steering system and the resulting steering angle or steering angle velocity/acceleration is predetermined and depends on the gear ratio of the electric power steering system and the gear ratio of the hydraulic power steering system. If the actual steering angle or steering angle velocity/acceleration does not correspond to the expected predetermined steering angle or steering angle velocity/acceleration, one may conclude that there is a failure in the hydraulic power steering system. Of course, this conclusion can only be drawn if there is no indication of failure in the electric power steering system. Failure in the electric power steering system is easily detected according to conventional methods. Thus, by determining the target steering angle change based on a requested steering angle and the current steering angle and controlling the electric power steering system to provide this target steering angle change, failures in the hydraulic power steering system may be detected based on the resulting steering angle velocity or acceleration. When there is a continuous correction of the steering angle to follow the target trajectory of the vehicle, the target steering angle change will be above zero and the electric power steering system will provide steering torque. However, when the vehicle is following its target trajectory/path the current steering angle will be similar or equal to the requested steering angle. The determined target steering angle change will thus be essentially zero and no, or very little, steering torque will be provided by the electric power steering system. With no steering torque provided, the steering angle remains the same and no steering angle velocity/acceleration can be determined. Thus, any failures in the hydraulic steering system will not be detected unless the steering angle is changed. By means of the invention, the electric power steering system will be controlled to provide a steering torque corresponding to a higher steering angle change than the determined target steering angle change, when the determined target steering angle change is too small. By too small means too small to enable detection of failure. Thus, even though it is not required for following the target trajectory, the electric power steering system is controlled to change the actual steering angle and thereby enable detection of failure in the hydraulic power steering system. This way, failures can be detected at an early stage before change of steering angle is actually required by the vehicle and thus before the steering torque is at a high level. The detection time is thereby reduced and safety is increased.

Further objects, advantages and novel features of the present invention will become apparent to one skilled in the art from the following details, and also by putting the invention into practice. Whereas examples of the invention are described below, it should be noted that it is not restricted to the specific details described. Specialists having access to the teachings herein will recognise further applications, modifications and incorporations within other fields, which are within the scope of the claims.

### BRIEF DESCRIPTION OF THE DRAWINGS

For better understanding of the present invention and further objects and advantages of it, the detailed description set out below should be read together with the accompanying drawings, in which the same reference notations denote similar items in the various diagrams, and in which:
- Figure 1: schematically illustrates a side view of a vehicle according to an example;
- Figure 2: schematically illustrates a hybrid steering system of a vehicle according to an example;
- Figure 3: schematically illustrates a control device according to an example;
- Figure 4: schematically illustrates a block diagram of a method for determining hydraulic failure of a hybrid steering system of a vehicle according to an example; and
- Figure 5: schematically illustrates a control device or computer according to an example.

### DETAILED DESCRIPTION

Automated operation of vehicles is becoming more and more common and with no driver available higher requirements with regard to safety is put on the vehicles. To increase safety and detect failures in a hydraulic power steering system, a method, a control device and a hybrid steering system according to the disclosure has been developed.

Hence, according to an aspect of the present disclosure, a method, performed by a control device, for determining hydraulic failure in a hybrid steering system during automated operation of a vehicle is provided. The hybrid steering system comprises: a steering column connected to a wheel axle with steerable wheels; an electric power steering system connected to the steering column; and a hydraulic power steering system connected to the electric power steering system. The method comprises: determining a target steering angle change to be provided by means of the electric power steering system, based on a requested steering angle and a current steering angle; controlling the electric power steering system to temporarily provide a steering torque corresponding to a first target steering angle change larger than the determined target steering angle change, when the determined target steering angle change is lower than a predetermined threshold value; determining a steering angle velocity and/or steering angle acceleration resulting from the provided steering torque; and determining whether a hydraulic failure has occurred based on the determined steering angle velocity and/or steering angle acceleration.

The hybrid steering system may also be referred to as an electro-hydraulic steering system. The hybrid steering system may comprise a steering wheel connected to the steering column.

The electric power steering system may comprise an electrical machine and a first steering gear device connected to the steering column. The electric power steering system is arranged in communication with the control device.

Hydraulic power steering systems are common and are typically used in heavy vehicles. The hydraulic power steering system according to the disclosure may thus be mechanically connected to the steerable wheels of the vehicle via a linkage. The hydraulic power steering system may further be mechanically connected to the steering column. The hydraulic power steering system may also comprise a second steering gear device for amplifying the torque applied on the steering column to the steerable wheels. The steering gear device may comprise a steering gear and a hydraulic actuator for transferring hydraulic power to the steerable wheels. The hydraulic power steering system may further comprise a valve arrangement configured to open and close based on the steering torque applied on the steering column, for controlling a hydraulic flow. The more torque is applied on the steering column by the electric power steering system, the more fluid is allowed to flow through the valve arrangement and the more force is applied on the steerable wheels. The valve arrangement may be connected to the steering column. The valve arrangement may be connected to the control device.

The requested steering angle, the current steering angle, the determined target steering angle change and the first target steering angle change relate to the steering column. Thus, the determined steering angle velocity and/or steering angle acceleration relates to the steering column.

Determining a target steering angle change to be provided by means of the electric power steering system may comprise comparing the requested steering angle and the current steering angle. Thus, determining the target steering angle change may comprise determining the difference between the requested steering angle and the current steering angle. The target steering angle change is thus how the current steering angle should be changed to achieve the requested steering angle. When the steerable wheels are positioned straight ahead and thus are aligned with the longitudinal extension of the vehicle, the steering angle may be zero. The steerable wheels are thus in a zero position. The steering angle may be negative when the steerable wheels are turned clockwise and positive when the steerable wheels are turned counter-clockwise in relation to the zero position. However, the target steering angle change is the difference in steering angle and is always positive. However, in order to be able to know how to steer the vehicle, the sign (plus or minus) of the requested steering angle and the current steering angle is important to know. The current steering angle may be determined according to conventional methods. The current steering angle may thus be determined by means of a steering angle sensor arranged in association with the steering column and/or the steerable wheels.

Determining a target steering angle change to be provided by the electric power steering system may be performed based on a requested steering angle from an automatic driving system of the vehicle. Normally, the requested steering angle is requested by the driver inside the vehicle turning the steering wheel, and is determined by means of steering angle sensors associated with the steering wheel. However, since the method according to the disclosure is performed during automated operation of the vehicle, the requested steering angle is provided in a different way. The requested steering angle may thus be requested from an automatic driving system of the vehicle. The requested steering angle may thereby be determined by another vehicle system arranged in communication with the hybrid power system and the control device. The requested steering angle may be determined by a lane keeping assistance system, a cruise control system or similar. Alternatively, the requested steering angle may be requested by a remote operator of the vehicle and communicated to the control device. Determining a target steering angle change to be provided by the electric power steering system may thus comprise receiving a requested steering angle from another vehicle system, such as an automatic driving system, or from an external control centre or remote control.

In another example, the control device determines the requested steering angle based on data from a plurality of sensor devices arranged on the vehicle, data relating to a predetermined trajectory/route for the vehicle and/or map data. The method may thus comprise determining a requested steering angle based on data from a plurality of sensor devices arranged on the vehicle, data relating to a predetermined trajectory/route for the vehicle and/or map data. The requested steering angle is the steering angle required to follow the predetermined trajectory for the vehicle. The method may comprise determining a requested steering angle further based on data from a navigation system of the vehicle.

As mentioned above, a certain steering torque applied on the steering column by the electric power steering system should result in a certain steering angle velocity/acceleration. The relationship between the steering torque provided by the electric power steering system and the resulting steering angle velocity/acceleration is predetermined and depends on the gear ratio of the electric power steering system and the gear ratio of the hydraulic power steering system. Thus, based on the first target steering angle change and the known relationship, the steering torque corresponding to the first target steering angle can be determined/calculated. Controlling the electric power steering system to temporarily provide such a steering torque corresponding to the first target steering angle change comprises controlling an electrical machine of the electric power steering system to apply the steering torque on the steering column. Controlling the electric power steering system to provide a steering torque corresponding to the first target steering angle change when the determined target steering angle change is below the predetermined threshold value may comprise determining that the determined target steering angle change is below the predetermined threshold value. Determining that the determined target steering angle change is below the predetermined threshold value may comprise comparing the determined target steering angle change with the predetermined threshold value stored in the control device.

The method may also comprise, when it is determined that the determined target steering angle change is above the predetermined threshold value, controlling the electric power steering system to provide a steering torque corresponding to the determined target steering angle change; determining a steering angle velocity and/or steering angle acceleration resulting from the provided steering torque; and determining whether a hydraulic failure has occurred based on the determined steering angle velocity and/or steering angle acceleration.

Determining a steering angle velocity and/or steering angle acceleration resulting from the provided steering torque may be performed based on a steering angle sensor arranged in association with the steering column. The steering angle sensor will send a signal to the control device indicating the resulting steering angle change. By determining the resulting steering angle change and the time it takes to achieve this change, the control device can determine the resulting steering angle velocity and/or acceleration.

Determining whether a hydraulic failure has occurred based on the determined steering angle velocity and/or steering angle acceleration may comprise comparing the determined steering angle velocity and/or steering angle acceleration with a predetermined set value of the angle velocity and/or steering angle acceleration. The predetermined set value of the angle velocity and/or steering angle acceleration may be stored in the control device. The predetermined set value of the angle velocity and/or steering angle acceleration are thus values that are expected to be achieved as a result of the provided steering torque when everything is functioning as normal. A hydraulic failure may thus be determined to have occurred when the determined steering angle velocity and/or steering angle acceleration deviates from the predetermined set value of the angle velocity and/or steering angle acceleration. The determined steering angle velocity and/or steering angle acceleration may be compared with a predetermined set value of the angle velocity and/or steering angle acceleration relating to the provided steering torque on the steering column. The method may comprise determining the provided steering torque. The provided steering torque by the electric power steering system may for different reasons differ from the steering torque corresponding to the first target steering angle change. If the electric power steering system does not provide the steering torque corresponding to the first target steering angle change or the determined target steering angle change (when above the threshold value) there may a failure in the electric power steering system. The provided steering torque may be determined based on signals from a first torque sensor arranged in association with the valve arrangement. When the provided steering torque is determined, the predetermined set value of the steering angle velocity/acceleration can be selected for the provided steering torque. Typically, during automated operation, the steering torque provided on the steering column is the steering torque provided by the electrical power steering system. However, when a driver is present inside the vehicle the driver may unintentionally apply torque on a steering wheel by resting the hands, a book, a tablet or similar on the wheel. The electric power steering system may therefore comprise a second torque sensor configured to determine any driver input torque applied on the steering column. The first torque sensor may thus be configured to determine the sum of any driver input torque and the steering torque applied by the electric power steering system.

Determining whether a hydraulic failure has occurred based on the determined steering angle velocity and/or steering angle acceleration may comprise comparing the determined steering angle velocity and/or steering angle acceleration with a predetermined characteristic/behaviour of the angle velocity and/or steering angle acceleration. The predetermined characteristic/behaviour of the angle velocity and/or steering angle acceleration may be stored in and/or learned by the control device. The predetermined characteristic/behaviour of the angle velocity and/or steering angle acceleration are thus characteristics/behaviours that are expected to be achieved as a result of the provided steering torque when everything is functioning as normal. A hydraulic failure may thus be determined to have occurred when the determined steering angle velocity and/or steering angle acceleration deviates from the predetermined characteristic/behaviour of the angle velocity and/or steering angle acceleration. The determined steering angle velocity and/or steering angle acceleration may be compared with a predetermined characteristic/behaviour of the angle velocity and/or steering angle acceleration relating to the provided steering torque by the electric power steering system. The predetermined characteristic/behaviour may relate to a pattern. Comparing the determined steering angle velocity and/or steering angle acceleration with a static set value may be difficult since the provided steering torque may not be static. Comparing the steering angle velocity and/or steering angle acceleration with a predetermined pattern may thus be easier to determine if a hydraulic failure exist or not. Comparing the determined steering angle velocity and/or steering angle acceleration with a predetermined characteristic/behaviour of the angle velocity and/or steering angle acceleration may be performed by means of artificial neural networks (ANN).

According to an example, the predetermined threshold value is within the range of 0-20 degrees. The predetermined threshold value may be slightly above zero. Thus, the electric power steering system may be controlled to temporarily provide a steering torque corresponding to a first target steering angle change larger than the determined target steering angle change, when the determined target steering angle change is around zero. The electric power steering system may be controlled to temporarily provide a steering torque corresponding to a first target steering angle change larger than the determined target steering angle change, when the determined target steering angle change corresponds to a steering torque to be provided by the electric power steering system, which would not result in a measurable steering angle velocity or steering angle acceleration.

The first target steering angle change may be a value within the range of 0-20 degrees. The first target steering angle change may be selected based on the determined target steering angle change. The higher the determined target steering angle change, the smaller difference between the first target steering angle change and the determined target steering angle change. The first target steering angle change may be selected as a value corresponding to a relatively small resulting steering angle velocity or acceleration. Of course, the first target steering angle change should be small enough to ensure safety and not turn the vehicle too much.

According to an example, controlling the electric power steering system to temporarily provide a steering torque corresponding to a first target steering angle change comprises determining the steering torque corresponding to the first target steering angle change by means of an inverse model with the first target steering angle change as input. The model may relate to the predetermined relationship between the provided steering torque and the resulting steering angle and steering angle velocity/acceleration. The model thus relates to the configuration of the hybrid steering system, and specifically to the gear ratio of the electric power steering system and the gear ratio of the hydraulic power steering system.

Controlling the electric power steering system to temporarily provide a steering torque corresponding to a first target steering angle change may comprise transmitting control signals to an electrical machine of the electric power steering system with a predetermined interval. Typically, the electric power steering system may be controlled to temporarily provide a steering torque corresponding to a first target steering angle change and the electric power steering system may then be controlled to provide the previous steering torque. When repeating this, the electric power steering system will be controlled to achieve slalom steering. The electrical machine of the electric power steering system may be controlled by input signals having a relatively small amplitude. The input signal corresponding to the first target steering angle change will have a larger amplitude than an input signal corresponding to the determined target steering angle change. The electrical machine of the electric power steering system may be controlled by micro-slalom input signals in order to detect failure in the hydraulic power steering system, when the determined target steering angle change is lower than the predetermined threshold value.

According to an example, the method further comprises, when a failure is detected while providing the first target steering angle change: controlling the electric power steering system to temporarily provide a steering torque corresponding to a second target steering angle change larger than the first target steering angle change, wherein a steering angle velocity and/or steering angle acceleration resulting from the provided steering torque is determined; and wherein a hydraulic failure is determined to have occurred based on the determined steering angle velocity and/or steering angle acceleration. If the vehicle reaction to the provided steering torque is neglectable, meaning there is an indication for a hydraulic failure, it cannot be guaranteed that there is a failure. It might just be the provided steering torque that is too small to detect a resulting steering angle velocity and/or steering angle acceleration. Thus, the electric power steering system may therefore be controlled to provide a higher steering torque in order to verify detection of a failure in the hydraulic power steering system. The electric power steering system may be controlled to stepwise increase the provided steering torque until a detected failure is verified, up to a maximum steering torque threshold value. The maximum steering torque threshold value may be selected so as to ensure safety. The maximum steering torque threshold value may be selected so as to correspond to a steering angle change within the range of 1-20 degrees. A hydraulic failure in the hybrid steering system can be precluded already at a lower steering torque.

According to another aspect of the present disclosure, a control device configured for determining hydraulic failure of a hybrid steering system during automated operation of a vehicle is provided. The hybrid steering system comprises: a steering column connected to a wheel axle with steerable wheels; an electric power steering system connected to the steering column; and a hydraulic power steering system connected to the electric power steering system, wherein the control device is configured to: determine a target steering angle change to be provided by means of the electric power steering system, based on a requested steering angle and a current steering angle; control the electric power steering system to temporarily provide a steering torque corresponding to a first target steering angle change larger than the determined target steering angle change, when the determined target steering angle change is lower than a predetermined threshold value; determine a steering angle velocity and/or steering angle acceleration resulting from the provided steering torque; and determine whether a hydraulic failure has occurred based on the determined steering angle velocity and/or steering angle acceleration.

It will be appreciated that all the embodiments described for the method aspect of the disclosure performed by the control device are also applicable to the control device aspect of the disclosure. That is, the control device may be configured to perform any one of the steps of the method according to the various examples described above.

Thus, the control device may be configured to determine a target steering angle change to be provided by the electric power steering system based on a requested steering angle from an automatic driving system of the vehicle. The control device may be configured to determine the requested steering angle based on information from sensor devices on the vehicle. The control device may be configured to determine that a hydraulic failure has occurred when the determined steering angle velocity and/or steering angle acceleration deviates from a predetermined set value of the angle velocity and/or steering angle acceleration. The control device may be configured to determine that a hydraulic failure has occurred when the determined steering angle velocity and/or steering angle acceleration deviates from a predetermined characteristic/behaviour of the angle velocity and/or steering angle acceleration. The control device may be configured to determine the steering torque corresponding to the first target steering angle change by means of an inverse model with the first target steering angle change as input. The control device may further configured to control the electric power steering system to temporarily provide a steering torque corresponding to a first target steering angle change by transmitting control signals to an electrical machine of the electric power steering system with a predetermined interval. The control device may also be configured to, when a failure is detected (and thus cannot be precluded) while providing the first target steering angle change: control the electric power steering system to temporarily provide a steering torque corresponding to a second target steering angle change larger than the first target steering angle change.

It is to be understood that the control device performing the disclosed method may be implemented as a separate entity or distributed in two or more physical entities. The control device may comprise one or more control units and/or computers. The control device may thus be implemented or realised by the control device comprising a processor and a memory, the memory comprising instructions, which when executed by the processor causes the control device to perform the herein disclosed method steps. The control device is comprised in the vehicle and may be configured to operate the vehicle autonomously. The control device may comprise a first control unit of the electric power steering system. The first control unit of the electric power steering system may be configured to control the electrical machine of the electric power steering system. The control device may further comprise a second control unit of an automatic driving system of the vehicle. Some or all of the method steps of the present disclosure may thus be performed by the first control unit of the electric power steering system and/or by the second control unit of the automatic driving system. In one example, the second control unit of the automatic driving system determines the target steering angle change and transmits this to the first control unit of the electric power steering system. Alternatively, the second control unit of the automatic driving system determines the requested steering angle and transmits this to the first control unit, whereas the first control unit determines the target steering angle change based on this requested steering angle and the current steering angle. The first control unit may determine if the determined target steering angle change is lower than the predetermined threshold value. The first control unit may also determine the steering torque corresponding to the first target steering angle change and control the electrical machine to provide this steering torque. In the event that the first control unit is not comprised by the control device, controlling the electric power steering system may comprise transmitting control signals to the first control unit of the electric power steering system.

The control device may further comprise a third control unit comprised in the hydraulic power steering system. The hydraulic power steering system may comprise a third control for controlling opening and closing of said valve arrangement.

The control device may be adapted to operate and steer the vehicle autonomously based on received commands from a control centre, and based on sensor input regarding its surroundings and positioning. The control device may further be configured to receive control signals relating to the steering of the vehicle from a remotely located operator using a remote control, such as a joystick or similar, and based on these control signals control the hybrid steering system of the vehicle.

According to yet another aspect of the present disclosure, a hybrid steering system is provided. The hybrid steering system comprises a steering column connected to a wheel axle with steerable wheels; an electric power steering system connected to the steering column; and a hydraulic power steering system connected to the electric power steering system. The hybrid steering system further comprises a control device as disclosed herein.

According to another aspect of the present disclosure, a vehicle is provided. The vehicle comprises a hybrid steering system as disclosed herein. In one example, the vehicle comprises one hybrid steering system per steerable wheel. Each hybrid steering system may comprise a control device as disclosed herein, whereby the control devices are arranged in communication with each other. In this event, a detected hydraulic failure in one hybrid steering system should be communicated to the other hybrid steering system. Alternatively, the hybrid steering systems are controlled by the same control device.

The present disclosure will now be further illustrated with reference to the appended figures.

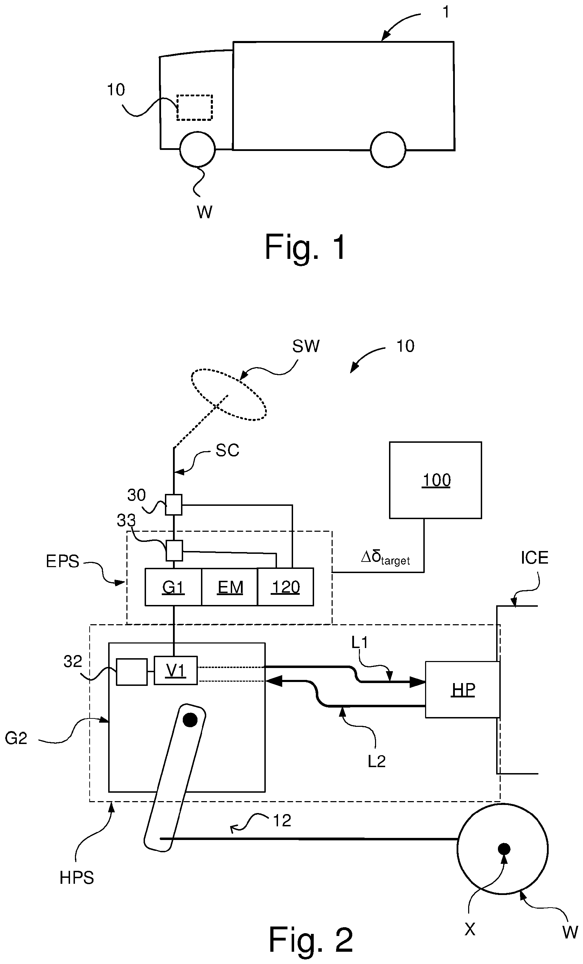

Figure 1 schematically illustrates a side view of a vehicle 1 according to an example. The exemplified vehicle 1 may be a commercial vehicle in the shape of a truck. The vehicle 1 may be any suitable vehicle such as a bus or a car. The vehicle 1 comprises a hybrid steering system 10 configured to steer the steerable wheels W of the vehicle 1. The hybrid steering system 10 is further described with regard to Figure 2.

Figure 2 schematically illustrates a hybrid steering system 10 of a vehicle according to an example. The hybrid steering system 10 may be comprised in a vehicle 1 as disclosed in Figure 1. The hybrid steering system 10 may also be referred to as an electro-hydraulic steering system. The hybrid steering system 10 comprises: a steering column SC connected to a wheel axle X with steerable wheels W; an electric power steering system EPS connected to the steering column SC; and a hydraulic power steering system HPS connected to the electric power steering system EPS.

The electric power steering system EPS may comprise an electrical machine EM and a first steering gear device G1 connected to the steering column SC. The electric power steering system EPS may further comprise a first control unit 120. The first control unit 120 is arranged to control the electrical machine EM to provide steering torque on the steering column SC via the first steering gear device.

The hydraulic power steering system HPS is mechanically connected to the steerable wheels W of the vehicle via a linkage 12. The linkage 12 may comprise a plurality of link arms and is connected to the hydraulic power steering system HPS at one end, and to a steerable wheel W at the other end. The linkage 12 is thus configured to transfer steering torque from the hydraulic power steering system HPS to the steerable wheel W. The hydraulic power steering system HPS may further be mechanically connected to the steering column SC. The hydraulic power steering system HPS may also comprise a second steering gear device G2 for amplifying the torque applied on the steering column SC to the steerable wheels W. The second steering gear device G2 may comprise a steering gear and a hydraulic actuator for transferring hydraulic power to the steerable wheels W. The hydraulic power steering system HPS may further comprise a valve arrangement V1 configured to open and close based on the steering torque applied on the steering column SC by the electric power steering system EPS, for controlling a hydraulic flow. The valve arrangement V1 is arranged in connection with the steering column SC. The hydraulic power steering system HPS further comprises a pump HP connected to the valve arrangement via hydraulic lines L1, L2. The pump HP is according to this example arranged to be operated by means of the vehicle engine ICE. The hydraulic lines L1, L2 may comprise hoses.

The hybrid steering system 10 may comprise a steering wheel SW connected to the steering column. The hybrid steering system may further comprise a steering angle sensor 30 for determining the steering angle of the steering column SC. The steering angle sensor 30 may thus be arranged in connection to the steering column SC. The steering angle sensor 30 may alternatively be arranged in connection to the steering wheel SW for detecting the steering angle.

The hybrid steering system 10 may further comprise a first torque sensor 32 configured to determine a degree of opening of the valve arrangement V1 and thereby determine the steering torque applied on the steering column SC. The first torque sensor 32 may be a mechanical torque sensor or an electrical torque sensor. The electric power steering system EPS may comprise a second torque sensor 33 configured to determine any driver input torque applied on the steering column SC. In the event that there is a driver inside the vehicle 1 and the vehicle 1 comprises a steering wheel SW, the driver may unintentionally apply torque on the steering wheel SW. Thus, even though the vehicle 1 is automatically operated the driver may rest his/her arms on the steering wheel SW or similar. The applied driver input torque may thereby affect the automated steering and may be classified as a disturbance. The first torque sensor 32 may thus be configured to determine the sum of any driver input torque and the steering torque applied by the electric power steering system EPS.

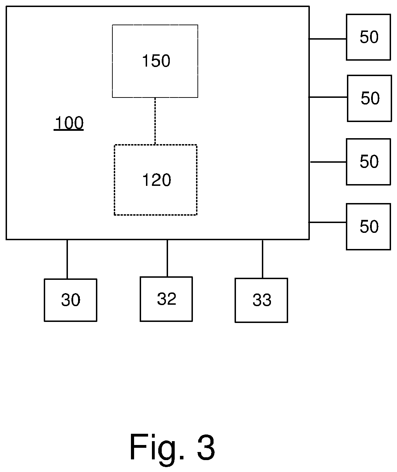

The hybrid steering system 10 may also comprise a control device 100. The control device 100 may be implemented as a separate entity or distributed in two or more physical entities. The control device may comprise one or more control units and/or computers. The control device 100 may be arranged in communication with the electric power steering system EPS, the steering angle sensor 30, the hydraulic power steering system HPS and the torque sensor 32. The control device 100 may be arranged in communication with the electrical machine EM and/or the first control unit 120 of the electric power steering system EPS. The control device 100 may further be arranged in communication with the valve arrangement V1 of the hydraulic power steering system HPS. The control device 100 may be configured to transmit a target steering angle change Δδ_{target} to the electric power steering system EPS, based on which target steering angle change Δδ_{target} the electrical machine EM is controlled. The control device 100 will be further described with regard to Figure 3.

Figure 3 schematically illustrates a control device 100 according to an example. The control device 100 may be configured to determine hydraulic failure in a hybrid steering system 10. The control device 100 may be comprised in a hybrid steering system 10 as disclosed in Figure 2. The control device 100 may be comprised in a vehicle 1 as disclosed in Figure 1.

The control device 10 may be implemented or realised by the control device 100 comprising a processor and a memory, the memory comprising instructions, which when executed by the processor causes the control device 100 to perform the herein disclosed method steps. The control device 100 may comprise the first control unit 120 of the electric power steering system EPS. The control device 100 may further comprise a second control unit 150 of an automatic driving system of the vehicle 1. Some or all of the method steps of the present disclosure may thus be performed by the first control unit 120 of the electric power steering system EPS and/or by the second control unit 150 of the automatic driving system.

The control device 100 is configured to determine a target steering angle change Δδ_{target} to be provided by means of the electric power steering system EPS, based on a requested steering angle and a current steering angle; control the electric power steering system EPS to temporarily provide a steering torque corresponding to a first target steering angle change larger than the determined target steering angle change Δδ_{target}, when the determined target steering angle change Δδ_{target} is lower than a predetermined threshold value; determine a steering angle velocity and/or steering angle acceleration resulting from the provided steering torque; and determine whether a hydraulic failure has occurred based on the determined steering angle velocity and/or steering angle acceleration.

The control device 100 may be configured to determine a target steering angle change Δδ_{target} to be provided by means of the electric power steering system EPS by comparing the requested steering angle and the current steering angle. Thus, the control device 100 may be configured to determine the target steering angle change Δδ_{target} as the difference between the requested steering angle and the current steering angle. The control device 100 may be configured to determine the current steering angle based on data from the steering angle sensor 30 arranged in association with the steering column SC. The control device 100 may be configured to determine a target steering angle change Δδ_{target} to be provided by the electric power steering system EPS based on a requested steering angle from an automatic driving system of the vehicle 1. Alternatively, the control device 100 may be configured to determine a target steering angle change Δδ_{target} to be provided by the electric power steering system EPS based on a requested steering angle from a remote operator of the vehicle 1. In another example, the control device 100 is configured to determine the requested steering angle based on data from a plurality of sensor devices 50 arranged on the vehicle 1, data relating to a predetermined trajectory/route for the vehicle 1 and/or map data.

The control device 100 may be configured to determine that the determined target steering angle change Δδ_{target} is below the predetermined threshold value. The control device 100 may be configured to control the electric power steering system EPS to temporarily provide a steering torque corresponding to the first target steering angle change by controlling the electrical machine EM of the electric power steering system EPS to apply the steering torque on the steering column SC.

The control device 100 may also be configured to determine that the determined target steering angle change Δδ_{target} is above the predetermined threshold value, and control the electric power steering system EPS to provide a steering torque corresponding to the determined target steering angle change Δδ_{target}.

The control device 100 may be configured to determine a steering angle velocity and/or steering angle acceleration resulting from the provided target steering angle based on data from the steering angle sensor 30 arranged in association with the steering column SC.

The control device 100 may further be configured to determine whether a hydraulic failure has occurred by comparing the determined steering angle velocity and/or steering angle acceleration with a predetermined set value of the angle velocity and/or steering angle acceleration relating to the provided steering torque. The predetermined set value of the angle velocity and/or steering angle acceleration may be stored in the control device 100. The control device 100 may be configured to determine that a hydraulic failure has occurred when the determined steering angle velocity and/or steering angle acceleration deviates from the predetermined set value of the angle velocity and/or steering angle acceleration. The control device 100 may be configured to determine the provided steering torque. The control device 100 may be configured to determine the provided steering torque based on signals from the first torque sensor 32 arranged in association with the valve arrangement V1 and/or the second torque sensor 33 arranged in association with the steering column SC.

The control device 100 may be configured to control the electric power steering system EPS to temporarily provide a steering torque corresponding to a first target steering angle change larger than the determined target steering angle change Δδ_{target}, when the determined target steering angle change is around zero.

The control device 100 may be configured to determine the steering torque corresponding to the first target steering angle change by means of an inverse model with the first target steering angle change as input.

The control device 100 may be configured to control the electric power steering system to temporarily provide a steering torque corresponding to a first target steering angle change by transmitting control signals to the electrical machine EM of the electric power steering system EPS with a predetermined interval. The control device 100 may thus be configured to transmit input signals having a relatively small amplitude. The control device 100 may be configured to control the electrical machine EM of the electric power steering system EPS by micro-slalom input signals, in order to detect hydraulic failure in the hybrid steering system, when the determined target steering angle change is lower than the predetermined threshold value.

The control device 100 may further be configured to, when a failure is detected while providing the first target steering angle change, control the electric power steering system to temporarily provide a steering torque corresponding to a second target steering angle change larger than the first target steering angle change, determine a steering angle velocity and/or steering angle acceleration resulting from the provided steering torque is determined; and determine that a hydraulic failure has occurred based on the determined steering angle velocity and/or steering angle acceleration. The control device 100 may be configured to control the electric power steering system EPS to stepwise increase the provided steering torque until a detected failure is verified, up to a maximum steering torque threshold value.

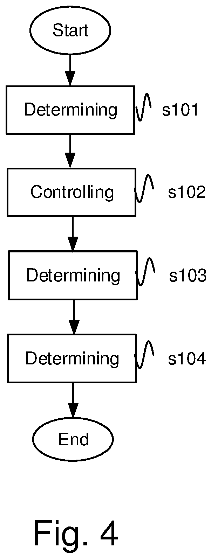

Fig. 4 schematically illustrates a block diagram of a method for determining hydraulic failure in a hybrid steering system of a vehicle according to an example. The method relates to a hybrid steering system 10 as disclosed in Figure 2 and is performed by a control device 100 as disclosed in Figure 3.

The method comprises: determining s101 a target steering angle change Δδ_{target} to be provided by means of the electric power steering system EPS, based on a requested steering angle and a current steering angle; controlling s102 the electric power steering system EPS to temporarily provide a steering torque corresponding to a first target steering angle change larger than the determined target steering angle change Δδ_{target}, when the determined target steering angle change Δδ_{target} is lower than a predetermined threshold value; determining s103 a steering angle velocity and/or steering angle acceleration resulting from the provided steering torque; and determining s104 whether a hydraulic failure has occurred based on the determined steering angle velocity and/or steering angle acceleration.

Determining s101 a target steering angle change Δδ_{target} to be provided by means of the electric power steering system EPS may comprise comparing the requested steering angle and the current steering angle. Thus, determining s101 the target steering angle change Δδ_{target} may comprise determining the difference between the requested steering angle and the current steering angle. The current steering angle may be determined according to conventional methods. The current steering angle may thus be determined by means of a steering angle sensor 30 arranged in association with the steering column SC.

Determining s101 a target steering angle change Δδ_{target} to be provided by the electric power steering system EPS may be performed based on a requested steering angle from an automatic driving system of the vehicle 1. Alternatively, determining s101 a target steering angle change Δδ_{target} to be provided by the electric power steering system EPS may be performed based on a requested steering angle from a remote operator of the vehicle 1. Determining s101 a target steering angle change Δδ_{target} to be provided by the electric power steering system EPS may thus comprise receiving a requested steering angle from another vehicle system, such as an automatic driving system, or from an external control centre or remote control.

Determining s101 a target steering angle change Δδ_{target} to be provided by the electric power steering system EPS may comprise determining a requested steering angle based on data from a plurality of sensor devices 50 arranged on the vehicle 1. Determining s101 a target steering angle change Δδ_{target} to be provided by the electric power steering system EPS may comprise determining a requested steering angle based on data from a plurality of sensor devices 50 arranged on the vehicle 1, data relating to a predetermined trajectory/route for the vehicle 1 and/or map data.

Controlling s102 the electric power steering system EPS to temporarily provide a steering torque corresponding to a first target steering angle change may comprise determining/calculating the steering torque corresponding to the first target steering angle. Controlling s102 the electric power steering system EPS to temporarily provide a steering torque corresponding to the first target steering angle change may comprise controlling an electrical machine EM of the electric power steering system EPS to apply the steering torque on the steering column SC. Controlling s102 the electric power steering system EPS to provide a steering torque corresponding to the first target steering angle change when the determined target steering angle change Δδ_{target} is below the predetermined threshold value may comprise determining that the determined target steering angle change Δδ_{target} is below the predetermined threshold value. Determining that the determined target steering angle change Δδ_{target} is below the predetermined threshold value may comprise comparing the determined target steering angle change Δδ_{target} with the predetermined threshold value stored in the control device 100.

Determining s103 a steering angle velocity and/or steering angle acceleration resulting from the provided steering torque may be performed based on data from a steering angle sensor 30 arranged in association with the steering column SC. The steering angle sensor 30 may send a signal to the control device 100 indicating the resulting steering angle change. By determining the resulting steering angle change and the time it takes to achieve this change, the control device 100 can determine the resulting steering angle velocity and/or acceleration.

Determining s104 whether a hydraulic failure has occurred based on the determined steering angle velocity and/or steering angle acceleration may comprise comparing the determined steering angle velocity and/or steering angle acceleration with a predetermined set value of the angle velocity and/or steering angle acceleration. The predetermined set value of the angle velocity and/or steering angle acceleration may be stored in the control device 100. A hydraulic failure may thus be determined s104 to have occurred when the determined steering angle velocity and/or steering angle acceleration deviates from the predetermined set value of the angle velocity and/or steering angle acceleration.

Determining s104 whether a hydraulic failure has occurred based on the determined steering angle velocity and/or steering angle acceleration may comprise comparing the determined steering angle velocity and/or steering angle acceleration with a predetermined characteristic/behaviour of the angle velocity and/or steering angle acceleration. The predetermined characteristic/behaviour of the angle velocity and/or steering angle acceleration may be stored in and/or learned by the control device 100. A hydraulic failure may thus be determined s104 to have occurred when the determined steering angle velocity and/or steering angle acceleration deviates from the predetermined characteristic/behaviour of the angle velocity and/or steering angle acceleration.

The method may comprise controlling s102 electric power steering system EPS to temporarily provide a steering torque corresponding to a first target steering angle change larger than the determined target steering angle change Δδ_{target}, when the determined target steering angle change Δδ_{target} is around zero. The method may comprise controlling s102 electric power steering system EPS to temporarily provide a steering torque corresponding to a first target steering angle change larger than the determined target steering angle change Δδ_{target}, when the steering torque corresponding to the determined target steering angle change Δδ_{target} is around zero.

Controlling s102 the electric power steering system EPS to temporarily provide a steering torque corresponding to a first target steering angle change may comprise determining the steering torque corresponding to the first target steering angle change by means of an inverse model with the first target steering angle change as input.

Controlling s102 the electric power steering system EPS to temporarily provide a steering torque corresponding to a first target steering angle change may comprise transmitting control signals to an electrical machine EM of the electric power steering system EPS with a predetermined interval. The method may comprise controlling s102 the electric power steering system EPS by micro-slalom input signals in order to detect failure in the hydraulic power steering system, when the determined target steering angle change Δδ_{target} is lower than the predetermined threshold value.

The method may further comprise, when a failure is detected while providing the first target steering angle change: controlling the electric power steering system EPS to temporarily provide a steering torque corresponding to a second target steering angle change larger than the first target steering angle change, where after method step s103 and s104 are performed. The method may comprise controlling s102 the electric power steering system EPS to stepwise increase the provided steering torque until a detected hydraulic failure is verified, up to a maximum steering torque threshold value. If the determined steering angle velocity and/or steering angle acceleration resulting from the maximum steering torque threshold value indicates a hydraulic failure, it may be concluded that a hydraulic failure exists.

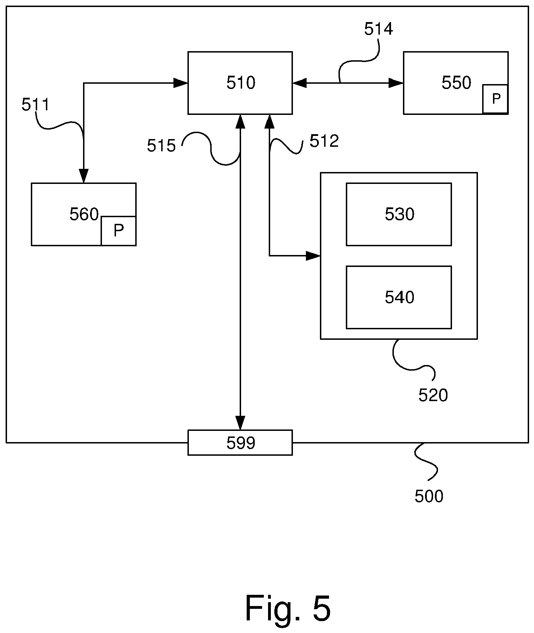

Figure 5 is a diagram of a version of a device 500. The control device 100 described with reference to Figure 3 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer programme P which comprises routines for determining whether a hydraulic failure occur in a hybrid steering system. The computer programme P further comprises routines for determining a target steering angle change to be provided by means of the electric power steering system, based on a requested steering angle and a current steering angle; controlling the electric power steering system to temporarily provide a steering torque corresponding to a first target steering angle change larger than the determined target steering angle change, when the determined target steering angle change is lower than a predetermined threshold value; determining a steering angle velocity and/or steering angle acceleration resulting from the provided steering torque; and determining whether a hydraulic failure has occurred based on the determined steering angle velocity and/or steering angle acceleration. The programme P may be stored in an executable form or in a compressed form in a memory 560 and/or in a read/write memory 550.

Where the data processing unit 510 is described as performing a certain function, it means that the data processing unit 510 effects a certain part of the programme stored in the memory 560 or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514.

When data are received on the data port 599, they are stored temporarily in the second memory element 540. When input data received have been temporarily stored, the data processing unit 510 is prepared to effect code execution as described above.

Parts of the methods herein described may be effected by the device 500 by means of the data processing unit 510, which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive or to restrict the invention to the variants described. Many modifications and variations will obviously be apparent to one skilled in the art within the scope of the claims.

The embodiments have been chosen and described in order best to explain the principles of the invention and its practical applications and hence make it possible for specialists to understand the invention for various embodiments and with the various modifications appropriate to the intended use.

## Claims

1. A method, performed by a control device (100), for determining hydraulic failure of a hybrid steering system (10) during automated operation of a vehicle (1), said hybrid steering system (10) comprising:
a steering column (SC) connected to a wheel axle (X) with steerable wheels (W);
an electric power steering system (EPS) connected to the steering column (SC); and
a hydraulic power steering system (HPS) connected to the electric power steering system (EPS),
the method being **characterised by**:
determining (s101) a target steering angle change (Δδ_{target}) to be provided by means of the electric power steering system (EPS), based on a requested steering angle and a current steering angle;
controlling (s102) the electric power steering system (EPS) to temporarily provide a steering torque corresponding to a first target steering angle change larger than the determined target steering angle change (Δδ_{target}), when the determined target steering angle change (Δδ_{target}) is lower than a predetermined threshold value;
determining (s103) a steering angle velocity and/or steering angle acceleration resulting from the provided steering torque; and
determining (s104) whether a hydraulic failure has occurred based on the determined steering angle velocity and/or steering angle acceleration.

2. The method according to claim 1, wherein determining (s101) a target steering angle change (Δδ_{target}) to be provided by the electric power steering system (EPS) is performed based on a requested steering angle from an automatic driving system of the vehicle (1).

3. The method according to claim 1 or 2, wherein the predetermined threshold value is within the range of 0-20 degrees.

4. The method according to any one of the preceding claims, wherein a hydraulic failure is determined (s104) to have occurred when the determined steering angle velocity and/or steering angle acceleration deviates from a predetermined set value of the angle velocity and/or steering angle acceleration.

5. The method according to any one of the preceding claims, wherein a hydraulic failure is determined (s104) to have occurred when the determined steering angle velocity and/or steering angle acceleration deviates from a predetermined characteristic/behaviour of the angle velocity and/or steering angle acceleration.

6. The method according to any one of the preceding claims, wherein controlling (s102) the electric power steering system (EPS) to temporarily provide a steering torque corresponding to a first target steering angle change comprises determining the steering torque corresponding to the first target steering angle change by means of an inverse model using the first target steering angle change as input.

7. The method according to any one of the preceding claims, wherein controlling (s102) the electric power steering system (EPS) to temporarily provide a steering torque corresponding to a first target steering angle change comprises transmitting control signals to an electrical machine (EM) of the electric power steering system (EPS) with a predetermined interval.

8. The method according to any one of the preceding claims, further comprising, when a hydraulic failure is detected while providing the first target steering angle change:
controlling the electric power steering system (EPS) to temporarily provide a steering torque corresponding to a second target steering angle change larger than the first target steering angle change.

9. A computer program (P) comprising instructions which, when the program is executed by a computer (100; 500), cause the computer (100; 500) to carry out the method according to any one of the preceding claims.

10. A computer-readable medium comprising instructions, which when executed by a computer (100; 500), cause the computer (100; 500) to carry out the method according to any one of claims 1-8.

11. A control device (100) configured for determining hydraulic failure of a hybrid steering system (10) during automated operation of a vehicle (1), said hybrid steering system (10) comprising:
a steering column (SC) connected to a wheel axle (X) with steerable wheels (W);
an electric power steering system (EPS) connected to the steering column (SC); and
a hydraulic power steering system (HPS) connected to the electric power steering system (EPS),
the control device being **characterised by** being configured to:
determine a target steering angle change (Δδ_{target}) to be provided by means of the electric power steering system (EPS), based on a requested steering angle and a current steering angle;
control the electric power steering system (EPS) to temporarily provide a steering torque corresponding to a first target steering angle change larger than the determined target steering angle change (Δδ_{target}), when the determined target steering angle change (Δδ_{target}) is lower than a predetermined threshold value;
determine a steering angle velocity and/or steering angle acceleration resulting from the provided target steering angle; and
determine whether a hydraulic failure has occurred based on the determined steering angle velocity and/or steering angle acceleration.

12. The control device (100) according to claim 11, wherein the control device (100) is configured to determine a target steering angle change (Δδ_{target}) to be provided by the electric power steering system (EPS) based on a requested steering angle from an automatic driving system of the vehicle (1).

13. The control device (100) according to claim 11 or 12, wherein the control device (100) is configured to determine that a hydraulic failure has occurred when the determined steering angle velocity and/or steering angle acceleration deviates from a predetermined set value of the angle velocity and/or steering angle acceleration.

14. The control device (100) according to claim 11 or 12, wherein the control device (100) is configured to determine that a hydraulic failure has occurred when the determined steering angle velocity and/or steering angle acceleration deviates from a predetermined characteristic/behaviour of the angle velocity and/or steering angle acceleration.

15. The control device (100) according to any one of claims 11-14, wherein the control device (100) is configured to determine the steering torque corresponding to the first target steering angle change by means of an inverse model with the first target steering angle change as input.

16. The control device (100) according to any one of claims 11-15, wherein the control device (100) is configured to control the electric power steering system (EPS) to temporarily provide a steering torque corresponding to a first target steering angle change by transmitting control signals to an electrical machine (EM) of the electric power steering system (EPS) with a predetermined interval.

17. The control device (100) according to any one of claims 11-16, wherein the control device (100) is configured to, when a hydraulic failure is detected while providing the first target steering angle change:
control the electric power steering system (EPS) to temporarily provide a steering torque corresponding to a second target steering angle change larger than the first target steering angle change.

18. A hybrid steering system (10), comprising:
a steering column (SC) connected to a wheel axle (X) with steerable wheels (W),
an electric power steering system (EPS) connected to the steering column (SC); and
a hydraulic power steering system (HPS) connected to the electric power steering system (EPS),
wherein the hybrid steering system (10) further comprises a control device (100) according to any one of claims 11-17.

19. A vehicle (1) comprising a hybrid steering system (10) according to claim 18.

## Patentansprüche

1. Verfahren, das von einer Steuervorrichtung (100) durchgeführt wird, um einen hydraulischen Defekt eines Hybrid-Lenksystems (10) während eines automatisierten Betriebs eines Fahrzeugs (1) festzustellen, wobei das Hybrid-Lenksystem (10) aufweist:
eine Lenksäule (SC), die mit einer Radachse (X) mit lenkbaren Rädern (W) verbunden ist;
ein elektrisches Servolenkungssystem (EPS), das mit der Lenksäule (SC) verbunden ist; und
ein hydraulisches Servolenkungssystem (HPS), das mit dem elektrischen Servolenkungssystem (EPS) verbunden ist,
wobei das Verfahren **gekennzeichnet ist durch**:
Ermitteln (s101) einer Soll-Lenkwinkeländerung (Δδ_{target}), die basierend auf einem angeforderten Lenkwinkel und einem aktuellen Lenkwinkel mittels des elektrischen Servolenkungssystems (EPS) vorgenommen werden soll;
Steuern (s102) des elektrischen Servolenkungssystems (EPS), um vorübergehend ein Lenkmoment zu liefern, das einer ersten Soll-Lenkwinkeländerung entspricht, die größer ist als die ermittelte Soll-Lenkwinkeländerung (Δδ_{target}), wenn die ermittelte Soll-Lenkwinkeländerung (Δδ_{target}) kleiner ist als ein vorbestimmter Schwellenwert;
Bestimmen (s103) einer sich aus dem gelieferten Lenkmoment ergebenden Lenkwinkelgeschwindigkeit und/oder einer Lenkwinkelbeschleunigung; und
Feststellen (s104), basierend auf der bestimmten Lenkwinkelgeschwindigkeit und/oder Lenkwinkelbeschleunigung, ob ein hydraulischer Defekt aufgetreten ist.

2. Verfahren nach Anspruch 1, wobei das Ermitteln (s101) einer von dem elektrischen Servolenkungssystem (EPS) vorzunehmenden Soll-Lenkwinkeländerung (Δδ_{target}) auf der Grundlage eines von einem automatischen Fahrsystem des Fahrzeugs (1) angeforderten Lenkwinkels erfolgt.

3. Verfahren nach Anspruch 1 oder 2, wobei der vorbestimmte Schwellenwert innerhalb des Bereichs von 0 - 20 Grad liegt.

4. Verfahren nach einem der vorhergehenden Ansprüche, wobei ein Hydraulikdefekt festgestellt wird (s104), wenn die bestimmte Lenkwinkelgeschwindigkeit und/oder Lenkwinkelbeschleunigung von einem vorgegebenen Sollwert der Lenkwinkelgeschwindigkeit und/oder Lenkwinkelbeschleunigung abweicht.

5. Verfahren nach einem der vorhergehenden Ansprüche, wobei ein Hydraulikdefekt festgestellt wird (s104), wenn die bestimmte Lenkwinkelgeschwindigkeit und/oder Lenkwinkelbeschleunigung von einer vorgegebenen Charakteristik/Verhalten der Lenkwinkelgeschwindigkeit und/oder Lenkwinkelbeschleunigung abweicht.

6. Verfahren nach einem der vorhergehenden Ansprüche, wobei das Steuern (s102) des elektrischen Servolenkungssystems (EPS) zum vorübergehenden Liefern eines Lenkmoments, das einer ersten Soll-Lenkwinkeländerung entspricht, ein Bestimmen des der ersten Soll-Lenkwinkeländerung entsprechenden Lenkmoments mittels eines inversen Modells unter Verwendung der ersten Soll-Lenkwinkeländerung als Eingabe umfasst.

7. Verfahren nach einem der vorhergehenden Ansprüche, wobei das Steuern (s102) des elektrischen Servolenkungssystems (EPS) zum vorübergehenden Liefern eines Lenkmoments, das einer ersten Soll-Lenkwinkeländerung entspricht, das Übertragen von Steuersignalen an eine elektrische Maschine (EM) des elektrischen Servolenkungssystems (EPS) mit einem vorbestimmten Intervall umfasst.

8. Verfahren nach einem der vorhergehenden Ansprüche, ferner umfassend, wenn ein hydraulischer Defekt erkannt wird, während die erste Soll-Lenkwinkeländerung vorgenommen wird:
Steuern des elektrischen Servolenkungssystems (EPS) zum vorübergehenden Liefern eines Lenkmoments, das einer zweiten Soll-Lenkwinkeländerung entspricht, die größer als die erste Soll-Lenkwinkeländerung ist.

9. Computerprogramm (P) mit Anweisungen, die, wenn das Programm von einem Computer (100; 500) ausgeführt wird, den Computer (100; 500) dazu veranlassen, das Verfahren nach einem der vorhergehenden Ansprüche auszuführen.

10. Computerlesbares Medium, das Anweisungen enthält, die, wenn sie von einem Computer (100; 500) ausgeführt werden, den Computer (100; 500) dazu veranlassen, das Verfahren nach einem der Ansprüche 1 - 8 auszuführen.

11. Steuervorrichtung (100), die zur Feststellung eines hydraulischen Ausfalls eines Hybrid-Lenksystems (10) während eines automatisierten Betriebs eines Fahrzeugs (1) konfiguriert ist, wobei das Hybrid-Lenksystem (10) umfasst:
eine Lenksäule (SC), die mit einer Radachse (X) mit lenkbaren Rädern (W) verbunden ist;
ein elektrisches Servolenkungssystem (EPS), das mit der Lenksäule (SC) verbunden ist; und
ein hydraulisches Servolenkungssystem (HPS), das mit dem elektrischen Servolenkungssystem (EPS) verbunden ist,
wobei die Steuervorrichtung **dadurch gekennzeichnet ist, dass** sie konfiguriert ist zum:
Ermitteln einer Soll-Lenkwinkeländerung (Δδ_{target}), die basierend auf einem angeforderten Lenkwinkel und einem aktuellen Lenkwinkel mittels des elektrischen Servolenkungssystems (EPS) vorgenommen werden soll;
Steuern des elektrischen Servolenkungssystems (EPS) zum vorübergehenden Liefern eines Lenkmoments, das einer ersten Soll-Lenkwinkeländerung entspricht, die größer ist als die ermittelte Soll-Lenkwinkeländerung (Δδ_{target}), wenn die ermittelte Soll-Lenkwinkeländerung (Δδ_{target}) kleiner ist als ein vorbestimmter Schwellenwert;
Bestimmen einer sich aus dem gelieferten Lenkmoment ergebenden Lenkwinkelgeschwindigkeit und/oder Lenkwinkelbeschleunigung; und
Feststellen, basierend auf der bestimmten Lenkwinkelgeschwindigkeit und/oder Lenkwinkelbeschleunigung, ob ein hydraulischer Defekt aufgetreten ist.

12. Steuervorrichtung (100) nach Anspruch 11, wobei die Steuervorrichtung (100) dazu konfiguriert ist, eine von dem elektrischen Servolenkungssystem (EPS) vorzunehmende Soll-Lenkwinkeländerung (Δδ_{target}) basierend auf einer Lenkwinkelanforderung von einem automatischen Fahrsystem des Fahrzeugs (1) zu bestimmen.

13. Steuervorrichtung (100) nach Anspruch 11 oder 12, wobei die Steuervorrichtung (100) dazu konfiguriert ist festzustellen, dass ein hydraulischer Defekt aufgetreten ist, wenn die bestimmte Lenkwinkelgeschwindigkeit und/oder Lenkwinkelbeschleunigung von einem vorgegebenen Sollwert der Lenkwinkelgeschwindigkeit und/oder Lenkwinkelbeschleunigung abweicht.

14. Steuervorrichtung (100) nach Anspruch 11 oder 12, wobei die Steuervorrichtung (100) dazu konfiguriert ist festzustellen, dass ein hydraulischer Defekt aufgetreten ist, wenn die bestimmte Lenkwinkelgeschwindigkeit und/oder Lenkwinkelbeschleunigung von einer vorgegebenen Charakteristik/Verhalten der Lenkwinkelgeschwindigkeit und/oder Lenkwinkelbeschleunigung abweicht.

15. Steuervorrichtung (100) nach einem der Ansprüche 11 - 14, wobei die Steuervorrichtung (100) dazu konfiguriert ist, das der ersten Soll-Lenkwinkeländerung entsprechende Lenkmoment mittels eines inversen Modells mit der ersten Soll-Lenkwinkeländerung als Eingabe zu bestimmen.

16. Steuervorrichtung (100) nach einem der Ansprüche 11 - 15, wobei die Steuervorrichtung (100) dazu konfiguriert ist, das elektrische Servolenkungssystem (EPS) zum vorübergehenden Liefern eines einer ersten Soll-Lenkwinkeländerung entsprechenden Lenkmoments durch Übertragen von Steuersignalen an eine elektrische Maschine (EM) des elektrischen Servolenkungssystems (EPS) mit einem vorbestimmten Intervall zu steuern.

17. Steuervorrichtung (100) nach einem der Ansprüche 11 - 16, wobei die Steuervorrichtung (100), wenn während des Vornehmens der ersten Soll-Lenkwinkeländerung ein hydraulischer Defekt erkannt wird, konfiguriert ist zum Steuern des elektrischen Servolenkungssystems (EPS) zum vorübergehenden Liefern eines Lenkmoments, das einer zweiten Soll-Lenkwinkeländerung entspricht, die größer ist als die erste Soll-Lenkwinkeländerung.

18. Hybrid-Lenksystem (10), umfassend:
eine Lenksäule (SC), die mit einer Radachse (X) mit lenkbaren Rädern (W) verbunden ist,
ein elektrisches Servolenkungssystem (EPS), das mit der Lenksäule (SC) verbunden ist; und
ein hydraulisches Servolenkungssystem (HPS), das mit dem elektrischen Servolenkungssystem (EPS) verbunden ist,
wobei das Hybrid-Lenksystem (10) ferner eine Steuervorrichtung (100) nach einem der Ansprüche 11 - 17 aufweist.

19. Fahrzeug (1) mit einem Hybrid-Lenksystem (10) nach Anspruch 18.

## Revendications

1. Procédé, exécuté par un dispositif de commande (100), pour déterminer une défaillance hydraulique d'un système de direction hybride (10) pendant le fonctionnement automatisé d'un véhicule (1), ledit système de direction hybride (10) comprenant :
une colonne de direction (SC) connectée à un essieu de roue (X) avec des roues directrices (W) ;
un système de direction assistée électrique (EPS) connecté à la colonne de direction (SC) ; et
un système de direction assistée hydraulique (HPS) connecté au système de direction assistée électrique (EPS),
le procédé étant **caractérisé par** :
la détermination (s101) d'un changement d'angle de direction cible (**Δδ**_{cible}) à fournir au moyen du système de direction assistée électrique (EPS), sur la base d'un angle de direction demandé et d'un angle de direction actuel ;
la commande (s102) du système de direction assistée électrique (EPS) pour fournir temporairement un couple de direction correspondant à un premier changement d'angle de direction cible plus grand que le changement d'angle de direction cible déterminé (**Δδ**_{cible}), lorsque le changement d'angle de direction cible déterminé (**Δδ**_{cible}) est inférieur à une valeur de seuil prédéterminée ;
la détermination (s103) d'une vitesse d'angle de direction et/ou d'une accélération d'angle de direction résultant du couple de direction fourni ; et
la détermination (s104) du fait qu'une défaillance hydraulique s'est produite sur la base de la vitesse de l'angle de direction et/ou de l'accélération de l'angle de direction déterminées.

2. Procédé selon la revendication 1, dans lequel la détermination (s101) d'une variation d'angle de braquage cible (**Δδ**_{cible}) à fournir par le système de direction assistée électrique (EPS) est effectuée sur la base d'un angle de braquage demandé par un système de conduite automatique du véhicule (1).

3. Procédé selon la revendication 1 ou 2, dans lequel la valeur de seuil prédéterminée se situe dans la plage de 0 à 20 degrés.

4. Procédé selon l'une quelconque des revendications précédentes, dans lequel on détermine (s104) qu'une défaillance hydraulique s'est produite lorsque la vitesse d'angle de braquage et/ou l'accélération d'angle de braquage déterminée s'écarte d'une valeur de consigne prédéterminée de la vitesse d'angle et/ou de l'accélération d'angle de braquage.

5. Procédé selon l'une quelconque des revendications précédentes, dans lequel on détermine (s104) qu'une défaillance hydraulique s'est produite lorsque la vitesse d'angle de braquage et/ou l'accélération d'angle de braquage déterminée s'écarte d'un(e) caractéristique/comportement prédéterminé(e) de la vitesse d'angle et/ou de l'accélération d'angle de braquage.

6. Procédé selon l'une quelconque des revendications précédentes, dans lequel la commande (s102) du système de direction assistée électrique (EPS) pour fournir temporairement un couple de direction correspondant à une première variation d'angle de direction cible comprend la détermination du couple de direction correspondant à la première variation d'angle de direction cible au moyen d'un modèle inverse utilisant la première variation d'angle de direction cible comme entrée.

7. Procédé selon l'une quelconque des revendications précédentes, dans lequel la commande (s102) du système de direction assistée électrique (EPS) pour fournir temporairement un couple de direction correspondant à un premier changement d'angle de direction cible comprend la transmission de signaux de commande à une machine électrique (EM) du système de direction assistée électrique (EPS) avec un intervalle prédéterminé.

8. Procédé selon l'une quelconque des revendications précédentes, comprenant en outre, lorsqu'une défaillance hydraulique est détectée tout en fournissant le premier changement d'angle de braquage cible :
la commande du système de direction assistée électrique (EPS) pour fournir temporairement un couple de direction correspondant à un second changement d'angle de direction cible plus grand que le premier changement d'angle de direction cible.

9. Programme informatique (P) comprenant des instructions qui, lorsque le programme est exécuté par un ordinateur (100, 500), amènent l'ordinateur (100, 500) à effectuer le procédé selon l'une quelconque des revendications précédentes.

10. Programme informatique comprenant des instructions qui, lorsqu'elles sont exécutées par un ordinateur (100, 500), amènent l'ordinateur (100, 500) à mettre en oeuvre le procédé selon l'une quelconque des revendications 1 à 8.

11. Dispositif de commande (100) configuré pour déterminer une défaillance hydraulique d'un système de direction hybride (10) pendant le fonctionnement automatisé d'un véhicule (1), ledit système de direction hybride (10) comprenant :
une colonne de direction (SC) connectée à un essieu de roue (X) avec des roues directrices (W) ;
un système de direction assistée électrique (EPS) connecté à la colonne de direction (SC) ; et
un système de direction assistée hydraulique (HPS) connecté au système de direction assistée électrique (EPS),
le dispositif de commande étant **caractérisé en ce qu'** il est configuré pour :
déterminer un changement d'angle de direction cible (**Δδ**_{cible}) à fournir au moyen du système de direction assistée électrique (EPS), sur la base d'un angle de direction demandé et d'un angle de direction actuel ;
commander le système de direction assistée électrique (EPS) pour fournir temporairement un couple de direction correspondant à un premier changement d'angle de direction cible plus grand que le changement d'angle de direction cible déterminé (**Δδ**_{cible}), lorsque le changement d'angle de direction cible déterminé (**Δδ**_{cible}) est inférieur à une valeur de seuil prédéterminée ;
déterminer une vitesse d'angle de direction et/ou d'une accélération d'angle de direction cible résultant de l'angle de direction cible fourni ; et
déterminer le fait qu'une défaillance hydraulique s'est produite sur la base de la vitesse de l'angle de direction et/ou de l'accélération de l'angle de direction déterminées.

12. Dispositif de commande (100) selon la revendication 11, dans lequel le dispositif de commande (100) est configuré pour déterminer une variation d'angle de braquage cible (Δδ_{cible}) à fournir par le système de direction assistée électrique (EPS) sur la base d'un angle de braquage demandé par un système de conduite automatique du véhicule (1).

13. Dispositif de commande (100) selon la revendication 11 ou 12, dans lequel le dispositif de commande (100) est configuré pour déterminer qu'une défaillance hydraulique s'est produite lorsque la vitesse d'angle de braquage et/ou l'accélération d'angle de braquage déterminée s'écarte d'une valeur de consigne prédéterminée de la vitesse d'angle et/ou de l'accélération d'angle de braquage.

14. Dispositif de commande (100) selon la revendication 11 ou 12, dans lequel le dispositif de commande (100) est configuré pour déterminer qu'une défaillance hydraulique s'est produite lorsque la vitesse d'angle de braquage et/ou l'accélération d'angle de braquage déterminée s'écarte d'un(e) caractéristique/comportement prédéterminé(e) de la vitesse d'angle et/ou de l'accélération d'angle de braquage.

15. Dispositif de commande (100) selon l'une quelconque des revendications 11 à 14, dans lequel le dispositif de commande (100) est configuré pour déterminer le couple de direction correspondant à la première variation d'angle de direction cible au moyen d'un modèle inverse avec la première variation d'angle de direction cible en entrée.

16. Dispositif de commande (100) selon l'une quelconque des revendications 11 à 15, dans lequel le dispositif de commande (100) est configuré pour commander le système de direction assistée électrique (EPS) pour fournir temporairement un couple de direction correspondant à un premier changement d'angle de direction cible en transmettant des signaux de commande à une machine électrique (EM) du système de direction assistée électrique (EPS) avec un intervalle prédéterminé.

17. Dispositif de commande (100) selon l'une quelconque des revendications 11 à 16, dans lequel le dispositif de commande (100) est configuré pour, lorsqu'aucune défaillance hydraulique n'est détectée tout en fournissant la première variation d'angle de braquage cible :
commander le système de direction assistée électrique (EPS) pour fournir temporairement un couple de direction correspondant à un second changement d'angle de direction cible plus grand que le premier changement d'angle de direction cible.

18. Système de direction hybride (10), comprenant :
une colonne de direction (SC) connectée à un essieu de roue (X) avec des roues directrices (W),
un système de direction assistée électrique (EPS) connecté à la colonne de direction (SC) ; et
un système de direction assistée hydraulique (HPS) connecté au système de direction assistée électrique (EPS),
dans lequel le système de direction hybride (10) comprend en outre un dispositif de commande (100) selon l'une quelconque des revendications 11 à 17.

19. Véhicule (1) comprenant un système de direction hybride (10) selon la revendication 18.
